# EUROPEAN PATENT SPECIFICATION

(11) **EP 2 744 673 B1**
(45) Date of publication and mention of the grant of the patent: **07.03.2018**
(21) Application number: 12751595.5
(22) Date of filing: 17.08.2012
(51) Int. Cl.: B60D 1/155, B60D 1/48, B60D 1/00

(54) **TOWING HITCH ASSEMBLY**
SEILANHÄNGEVORRICHTUNG
ENSEMBLE D'ATTELAGE DE REMORQUAGE

(30) Priority: 18.08.2011 GB 201114249
(43) Date of publication of application: 25.06.2014
(73) Proprietor: Storm Environmental Limited, Coventry Warwickshire CV1 2TL (GB)
(72) Inventor: POWELL, Ian, Coventry Warwickshire CV1 2TL (GB)
(74) Representative: Connell, Mark
(86) International application number: PCT/GB2012/052014
(87) International publication number: WO 2013/024303

(56) References cited:
- DE-A1-102007 024 761
- US-A1- 2007 138 760
- US-B1- 7 185 911

## Description

### Description of Invention

This invention relates to a towing hitch assembly, particularly to a towing hitch assembly for a moveable container, for attaching the moveable container to a vehicle for movement of the container.

A type of moveable container is used in the waste and recycling industry for containing waste. Such containers are used by many people and organisations, for example large industrial sites, railway stations, hospitals, clinical waste producers and in public areas such as exhibitions and parks. Such waste containers are generally approximately 1.5 metres tall, approximately 1.25 metres wide at their widest point (usually the top) and approximately 1 metre deep from front to back and weigh approximately 100kg (unladen) and approximately 450kg when full. Such waste containers are usually provided with wheels or castors but are awkward to manoeuvre, especially when full. Therefore, it is well known to tow such waste containers into position using a powered towing vehicle, for example an industrial towing tug.
In order to be able to tow an industrial waste container, it is necessary to provide a towing hitch, which can be attached to the towing vehicle. Such a container is disclosed in US 7,185,911 B1 which shows the preamble of claim 1. Known towing hitches are generally positioned near to a base part of the waste container, and some are pivotable relative to the waste container, so as to limit the extent to which the towing hitch extends outwardly from the body whilst the waste container is not being towed. This reduces the chances of passers by being injured by walking in to the towing hitch, and reduces the space required to position the waste container during use, i.e. whilst the container is being filled.

It is known to transport new moveable waste containers by stacking several identical or very similarly shaped containers, one inside the other. This reduces the space required in a container for shipping the containers from the manufacturer to a distributor or end user. Moveable waste containers often have sloping sides to aid stacking and unstacking. However, the provision of a towing hitch towards the base of each waste container reduces the depth to which an upper waste container can extend into a lower waste container, as the towing hitch fouls an inside wall of the lower container, completely preventing or inhibiting further downward movement of the upper container into the lower container. In order to avoid this disadvantage, it is usual to transport waste containers without towing hitches attached. However this means that the towing hitches have to be added at a later time, and this usually requires the removal of wheels and chassis parts which have already been attached to the waste container for transportation. This is a time consuming, and labour intensive process, and is undesirable from the point of view of the manufacturer and/or distributor.

According to a first aspect of the invention, there is provided a towing hitch assembly for attachment to a moveable container, the towing hitch assembly including:
a first part which is connectable to the moveable container;
a second part which is attachable to one of an adjacent container and a towing vehicle, the second part being slidably moveable relative to the first part, between a first, retracted configuration and a second, extended configuration; and
a catch device for holding the second part in the second configuration,
wherein the catch device comprises at least one catch member on one of the parts, wherein the or each catch member comprises a catch formation with which a formation on the other of the parts engages when in the second configuration, wherein the or each catch formation has a configuration to retain the formation on the other of the parts therein when the second part of the assembly is subject to lengthwise compressive forces,
characterised in that the or each catch formation has a retaining lip (48a).

A benefit of the present invention is that it is possible for waste containers which are complete with towing hitch assemblies to be stacked, particularly for transportation or storage, without the towing hitch assembly fouling a side wall of the adjacent waste container. Therefore, each waste container is able to sit further inside the waste container below, thus increasing the maximum number of containers that can be stacked within a certain height, for example the height of a shipping container or transporting vehicle. The towing hitch assembly is easily manoeuvrable between the two positions, and the waste container requires no modifications or additions by a distributor or user, thus reducing manufacturing time and the need to instruct additional staff members how to fit a towing hitch.

Further features of the invention are as set out in claims 2 to 14.

These and other features of the invention will now be described, by way of example only, with reference to the accompanying drawings, of which:

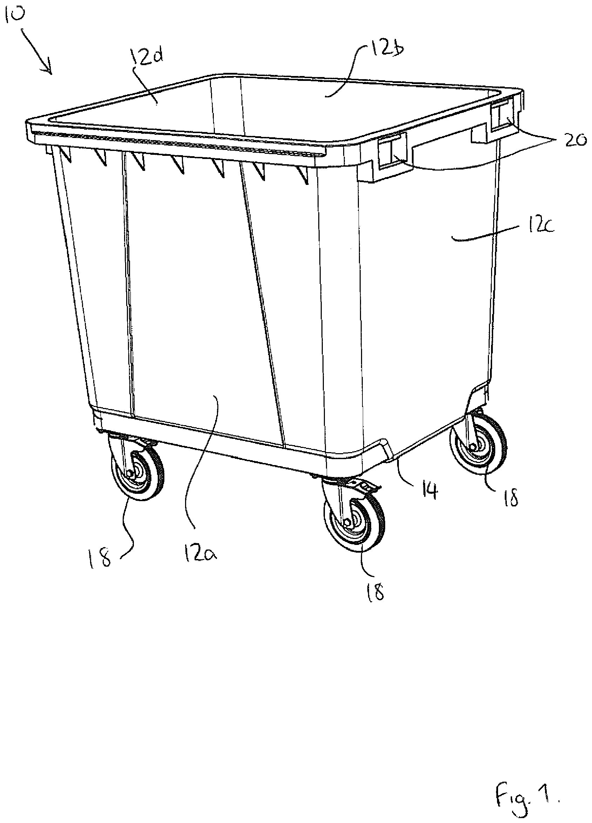

Figure 1 is a perspective view of a waste container of known type;

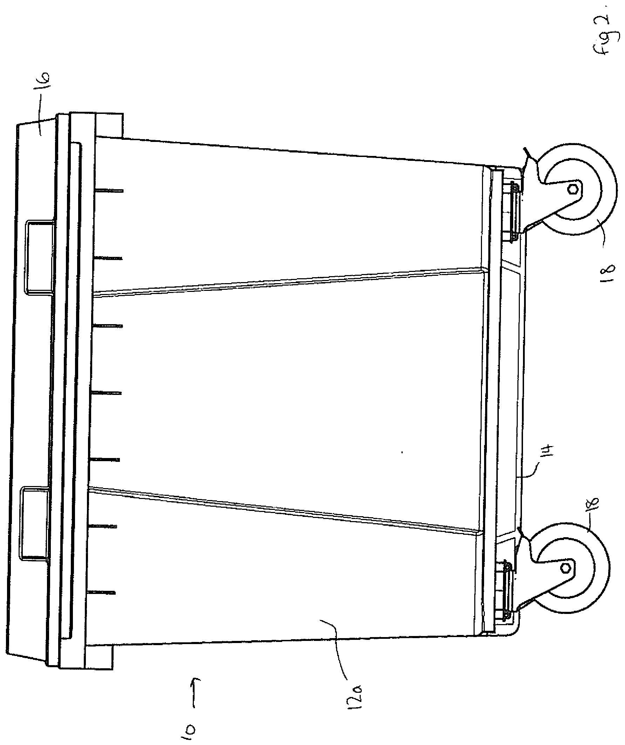

Figure 2 is a side view of a waste container, showing a lid in place;
Figures 3A and 3B are respectively a perspective view from beneath and a perspective view from above of a towing hitch assembly in accordance with the invention, the latter showing the assembly in a partially extended configuration;
Figure 3C is a perspective view from beneath of an extendible part of the hitch assembly.
Figures 4A-4D are side views of a part of the towing hitch assembly, with the assembly respectively in a fully retracted configuration, a partially extended configuration, a further extended configuration, and a fully extended configuration; and
Figure 5 is a side view of the towing hitch assembly attached to a waste container, with the hitch assembly in the retracted configuration.

Referring to the figures, there is shown an industrial waste container 10, having four generally upright walls 12a, 12b, 12c, 12d. Walls 12a and 12b are generally parallel with one another and are longer than walls 12c and 12d which are also generally parallel with one another. Thus the waste container 10 has a generally rectangular footprint.

The waste container 10 also includes a base 14 which extends between the walls 12a-d. Each of the walls 12a-12d slopes outwardly from the base, such that the waste container has an inverted truncated pyramid shape. Such a shape facilitates stacking of a plurality of waste containers, but it will be appreciated that the waste container 10 may be any suitable shape. The waste container may include a lid 16 which is attached to at least one of the walls 12a-d, and is moveable relative to the walls 12a-d between an open and a closed position, so as to permit access to an interior space of the container 10, and to close or seal the container 10, to conceal waste placed inside the container 10, and to avoid odours escaping from the container 10.

The waste container 10 includes ground engaging members 18, in this example castors 18, which are positioned one at each corner of the base 14 (only three of the castors are visible in the drawings).

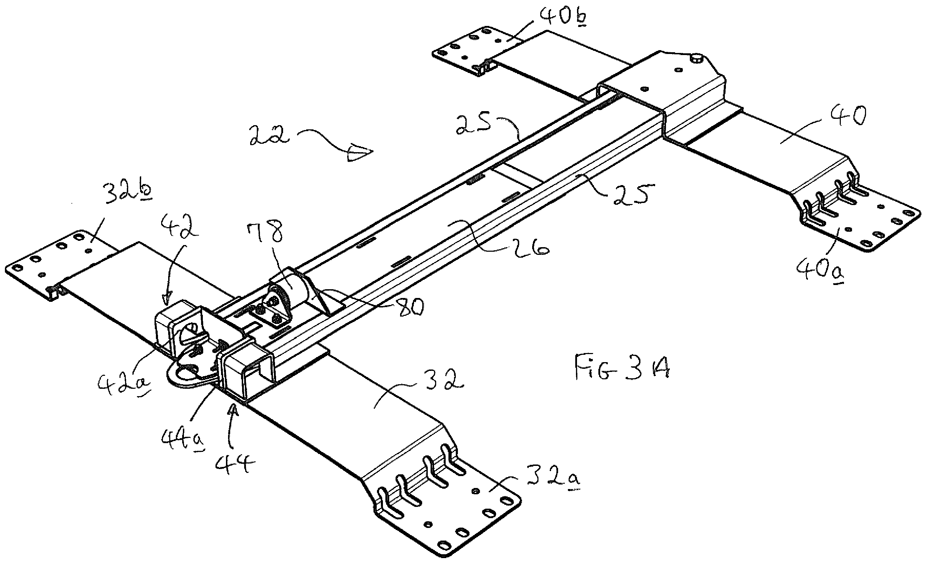

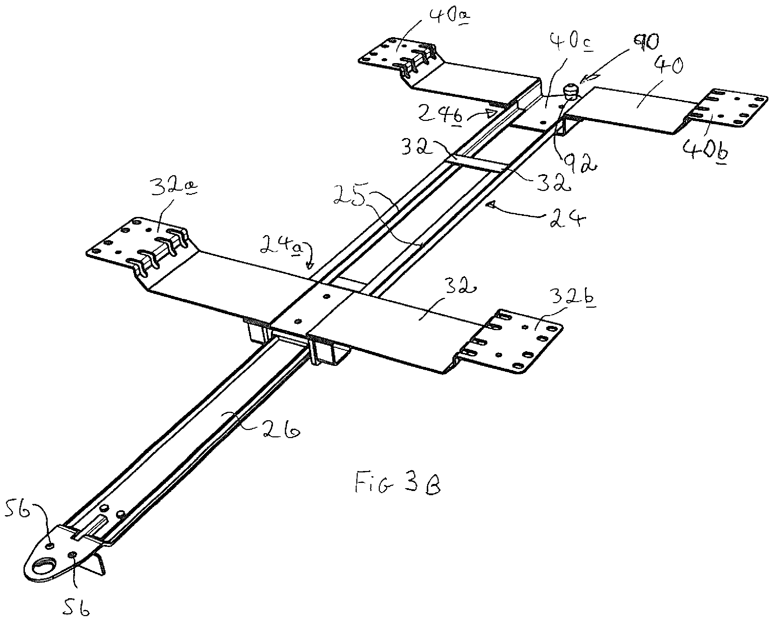

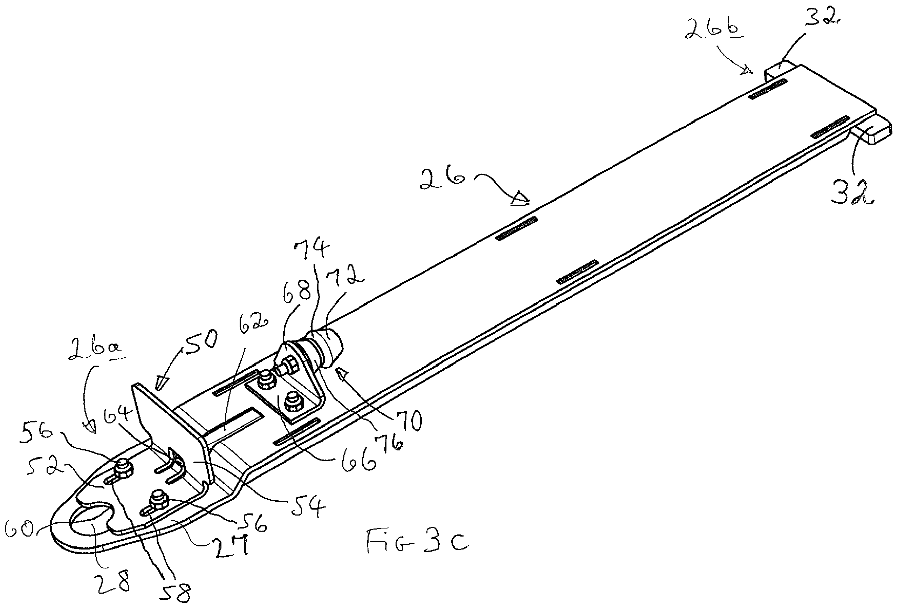

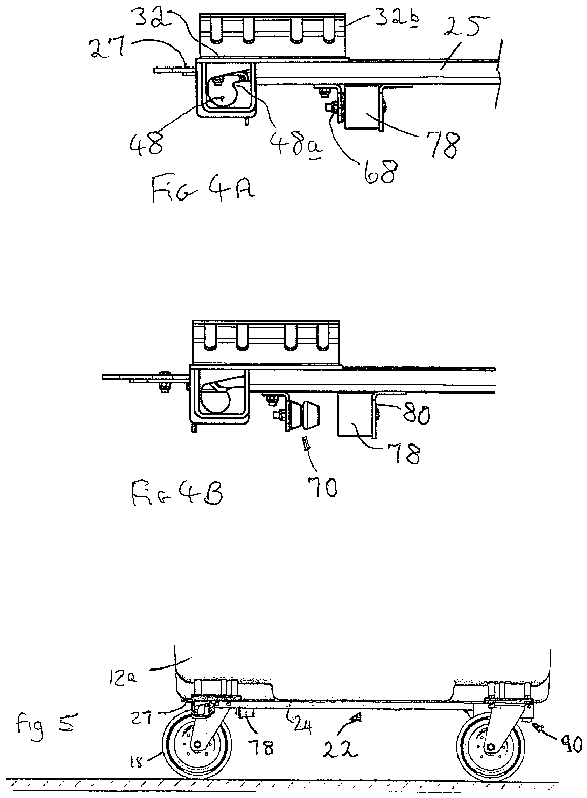

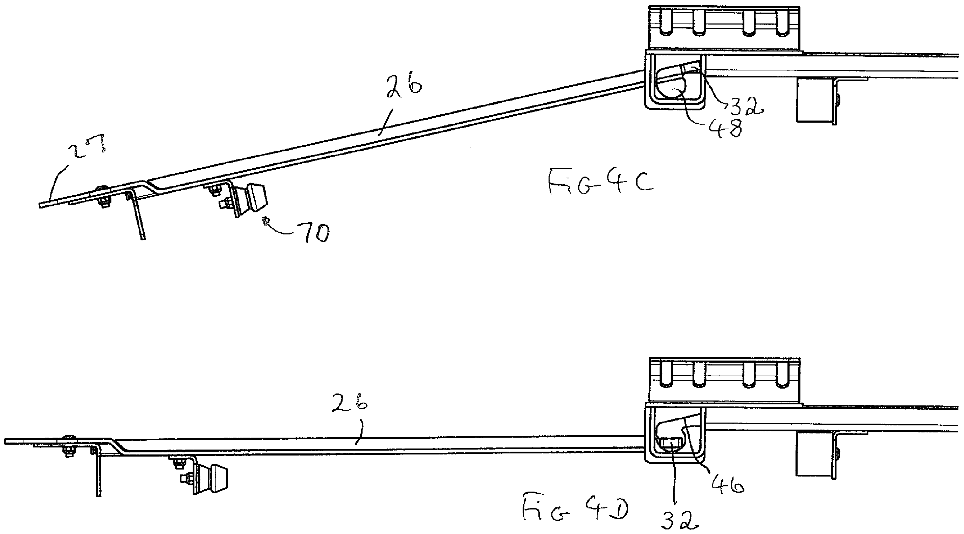

The waste container 10 is provided with a towing hitch assembly 22 shown in, and described in greater detail with reference to, figures 3 and 4 of the drawings. The towing hitch assembly 22 includes a first part 24 which is attachable to the underside of the base 14 of the waste container 10, and extends longitudinally of the waste container along the centre line thereof. The first part 24 carries, in slidably extendible and retractable manner, a second part 26 which is connectable to a towing vehicle in the manner of a draw bar.

The first part 24 of the hitch assembly comprises a pair of spaced parallel guide members 25 each of which is of L-section, and which are disposed so as to define parts of a guidance channel therebetween for receiving the second part 26. At a first end 24a of the part 24, the guide members 25 are secured to a first mounting part which extends transversely of the guide members 25. The mounting part 32 is of sheet metal, welded to the guide members 25, and having end portions 32a, 32b, which are off-set upwardly from the main part of the member 32 and provided with a number of apertures and slots for receiving fasteners such as bolts by which the member 32 can be secured to the underside of the waste container base 14. The fasteners which effect such securement may also hold the respective castors to the waste container at that end thereof, and the configuration of the apertures and slots in the end parts 32a, 32b enables those parts to be held between mounting plates of the castors and the base of the waste container, the fasteners passing through selected apertures/slots depending on the spacing of apertures in the mounting plates of the castors. At the other end 24b of the guide members 25, a further mounting part 40 is provided extending transversely of the guide members 25, the mounting part 40 having offset end parts 40a, 40b like the end parts 32a, 32b of the mounting member 32. A central part 40c of the mounting member 40 is offset below the level of the guide members 25, so as to define a recess in the mid part of the mounting member 40.

The second part 26 of the hitch assembly, is slidably connected to the first part 24 thereof and serves as a drawbar for connection to a towing vehicle. It is an elongate plate having a first end 26a and a second end 26b with flanges along its parallel longitudinal edges. At its first end 26a the part 26 has an offset tapering portions 27 provided with an attachment formation in the form of an aperture 28, e.g. circular. It will be appreciated that an attachment formation may, alternatively, comprise a hook or any other formation suitable for engagement with a towing formation of a towing vehicle.

Associated with the aperture 28 there is a spring-biased retaining member 50 which is a metal plate having two parts 52, 54 which extend substantially at right angles to one another. The part 52 lies in face to face relationship with the off-set portion 27 of the part 26, and is secured thereto by two bolts or other fasteners 56 which extend through apertures in the part 27 and through slots 58 in the part 52. The fasteners 56 are not tightened, so the member 50 is slidable a short distance in the direction of the length of the part 26. An end surface of the part 52 has a part-circular recess 60 which, in the position illustrated of the member 50, encroaches upon the area of the aperture 28. A biasing spring whose disposition is indicated at 62 is operative between the member 26 and an abutment 64 on the member 50. The part 54 of the member 50 enables the member to be manually moved away from the end of the part 26, against the force of the spring, so that the formation 60 does not encroach on the aperture 28.

Rearwardly of the spring 62, the part 26 has a bracket 66 bolted or otherwise secured thereto, the bracket 66 having an upstanding portion 68 which carries a rearwardly extending engagement member 70 of resilient and slightly flexible material, e.g. a relatively hard rubber. This has a conically-tapering nose part 72 with an undercut formation 74 and a stem 76 which is connected to the bracket portion 68. When the part 26 is fully retracted relative to the part 24, the member 70 is engagable within a sleeve 78 of like material, held by a bracket 80 which extends between the guide members 25 and is connected thereto e.g. by welding. Engagement of the member 70 within the sleeve 78 holds the part 26 in the fully retracted position relative to the part 24.

At its second end 26b, the part 26 has a transverse member ending in lugs 30 which extend laterally outwardly beyond the edges of the part 26, and which are slidable lengthwise of the guide members 25 in loose contact with the inwardly facing surfaces of the guide members. At the first end 24a of the part 24, beneath the transverse mounting member 32 and at the ends of the guide members 25, there are laterally spaced catch members indicated generally at 42, 44 with facing walls 42a, 44a each of which has a catch formation 48 in the form of an opening therein whose shape is best seen in figures 3A and 4A in relation to the wall 42a. A ramp portion 46 leads from the end of each of the guide members 25, inclined downwardly and forwardly to lead past a retaining lip 48a into the catch formation 48 so the formation 48 is of undercut configuration.

The part 24 is further provided, within the recess 40c of the member 40 at the rear end thereof, with a towing formation in the form of a towing pin 90 engagable by the towing formation 28 of a towing hitch assembly on a further waste container following the first said waste container. The towing pin 90 has the form of an upstanding circular boss, having a smaller-diameter lower portion 92 engagable by the retaining member 50 of the towing hitch assembly of the following waste container, so that the coupling between them remains engaged and requires manual retraction of the retaining member 50 when the coupling is to be disengaged.

Figures 4A to 4D show, in side view, the end part 24a of the hitch assembly part 24, with the part 26 of the hitch assembly in successive positions between its fully retracted and fully extended conditions. In the fully-retracted position of the part 26, shown in figure 4A, the formation 70 is engaged within the sleeve 78 and held frictionally therein, while only the extreme end part of offset portion 28 is accessible beyond the end of the part 24.

To extend the towing hitch assembly, the part 26 must be moved forwardly from the part 24 by grasping the portion 27 and pulling it forwardly to withdraw the formation 70 from the sleeve 78, overcoming the frictional resistance therebetween to such withdrawal. This position is shown in figure 4B, and further forwards sliding movement of the part 26 can be continued until the position shown in figure 4C is reached. At this position, the part 26 is tilted downwardly and the lugs 32 at the second end 26b of the part 26 engage the ramp formations 46. Upon a final forward movement of the part 26, the lugs 32 can fall downwardly (figure 4D), past the retaining lip 48a, to enter the undercut retaining formations 48. When this position has been reached, the part 26 is able to pivot freely upwardly and downwardly about its end part 26b, the lugs 32 moving within the formation 48, thereby enabling, firstly, the offset part 27 at the free end 26a of the part 26 to be moved upwardly and downwardly relatively freely so that it can be hitched to a towing vehicle, and, secondly, so that the towing vehicle and a container hitched thereto can change their relative inclinations when changes in gradient are encountered. If the part 26 is subject to lengthwise compressive forces rather than tensile forces, i.e. if a container being towed attempts to overrun the towing vehicle under braking or downhill gradient conditions, the lugs 32 are held within the formations 48 by the respective lips 48a, so the part 26 remains in the fully extended condition relative to the part 24 of the hitch assembly.

To unhitch the part 26 from the towing vehicle, if the hitch formation of the towing vehicle has an undercut configuration such as that shown on the hitch formation 90 described above, the retaining member 50 must manually be moved rearwardly against the force of its biasing spring, to disengage it from the hitch formation and permit the portion 27 to be lifted away from the hitch formation. When unhitched, moving the part 26 to its fully extended position relative to the part 24, with the portion 27 of part 26 lowered, enables the lugs 32 to be manually lifted past the retaining lips 48a, to a position at which the part 26 can be retracted relative to the part 24 and returned to its figure 4A position.

Figure 5 shows a side view of a waste container with the towing hitch assembly fitted to it. It will be apparent that the hitch formation 90 of the hitch assembly is accessible at the rear end of the container, for hitching a further container provided with a similar hitch assembly to the first and second container.

When used in this specification and claims, the terms "comprises" and "comprising" and variations thereof mean that the specified features, steps or integers are included. The terms are not to be interpreted to exclude the presence of other features, steps or components.

## Claims

1. A towing hitch assembly (22) for attachment to a moveable container (18), the towing hitch assembly including:
a first part (24) which is connectable to the moveable container;
a second part (26) which is attachable to one of an adjacent container and a towing vehicle, the second part (26) being slidably moveable relative to the first part (24), between a first, retracted configuration and a second, extended configuration; and
a catch device for holding the second part (26) in the second configuration,
wherein the catch device comprises at least one catch member (42, 44) on one of the parts (24, 26), wherein the or each catch member (42, 44) comprises a catch formation (48) with which a formation on the other of the parts (24, 26) engages when in the second configuration, wherein the or each catch formation (48) has a configuration to retain the formation on the other of the parts therein when the second part of the assembly is subject to lengthwise compressive forces,
**characterised in that** the or each catch formation (48) has a retaining lip (48a).

2. A towing hitch assembly according to claim 1 wherein, when in the first configuration, the towing hitch assembly (22) is positioned within a minimum footprint of a container (10) to which it is attached.

3. A towing hitch assembly according to claim 1 or claim 2 wherein the first part (24) includes a guide member (25) and the second part includes a projection which extends outwardly of the second part, and is receivable in the guide member so as to allow sliding movement of the second part relative to the first part.

4. A towing hitch assembly according to claim 3 wherein the first part includes a pair of guide members (25) and the projection of the second part includes a pair of lugs (32), each of which is receivable in a respective guide member (25).

5. A towing hitch assembly according to any one of the preceding claims having a retaining device (70, 78) for retaining the second part in the first configuration.

6. A towing hitch assembly according to claim 4 comprising respective catch formations (48) on the first part (24) of the assembly, within which the lugs (32) engage.

7. A towing hitch assembly to claim 6 wherein the lugs (32) enter the catch formations (48) downwardly when the assembly reaches the second configuration.

8. A towing hitch assembly according to any one of the preceding claims wherein the second part (26) has an attachment formation (28) for engagement with a towing formation of a towing vehicle or adjacent container.

9. A towing hitch assembly according to claim 8 wherein the attachment formation (28) comprises an aperture.

10. A towing hitch assembly according to claim 9 comprising a retaining member (50) for holding the attachment formation in engagement with the towing formation.

11. A towing hitch assembly according to claim 10 as appendant to claim 8 wherein the towing formation has a recess formation (92) for engagement by the retaining member of the hitch assembly of an adjacent container.

12. A moveable container including a towing hitch assembly according to any one of claims 1 to 5.

13. A moveable container according to claim 12 which is stackable with other identical or similar moveable containers, by virtue of the ability of the towing hitch to be positioned in the first retracted configuration.

14. A moveable container according to claim 13 which is a waste container.

## Patentansprüche

1. Seilanhängevorrichtung (22) zur Befestigung an einem fahrbaren Container (18), wobei die Seilanhängevorrichtung Folgendes beinhaltet:
einen ersten Teil (24), der mit dem fahrbaren Container verbindbar ist;
einen zweiten Teil (26), der an einem eines benachbarten Containers und eines Zugfahrzeugs befestigbar ist, wobei der zweite Teil (26) relativ zum ersten Teil (24) zwischen einer ersten, eingezogenen Konfiguration und einer zweiten, ausgefahrenen Konfiguration verschiebbar ist; und
eine Fangvorrichtung zum Halten des zweiten Teils (26) in der zweiten Konfiguration,
worin die Fangvorrichtung mindestens ein Fangelement (42, 44) an einem der Teile (24, 26) umfasst, worin das oder jedes Fangelement (42, 44) eine Fangformation (48) umfasst, in die eine Formation am anderen der Teile (24, 26) eingreift, wenn in der zweiten Konfiguration, worin die oder jede Fangformation (48) eine Konfiguration zum Halten der Formation am anderen der Teile darin, wenn Längsdruckkräfte auf den zweiten Teil der Vorrichtung einwirken, aufweist,
**dadurch gekennzeichnet, dass** die oder jede Fangformation (48) eine Haltelippe (48a) aufweist.

2. Seilanhängevorrichtung nach Anspruch 1, worin, wenn in der ersten Konfiguration, die Seilanhängevorrichtung (22) innerhalb einer Mindeststandfläche eines Containers (10), an dem sie befestigt ist, positioniert ist.

3. Seilanhängevorrichtung nach Anspruch 1 oder Anspruch 2, worin der erste Teil (24) ein Führungselement (25) beinhaltet und der zweite Teil einen Vorsprung beinhaltet, der sich aus dem zweiten Teil heraus nach außen erstreckt und im Führungselement aufnehmbar ist, um eine Gleitbewegung des zweiten Teils relativ zum ersten Teil zu ermöglichen.

4. Seilanhängevorrichtung nach Anspruch 3, worin der erste Teil ein Paar Führungselemente (25) beinhaltet und der Vorsprung des zweiten Teils ein Paar Laschen (32) beinhaltet, von denen jede in einem jeweiligen Führungselement (25) aufnehmbar ist.

5. Seilanhängevorrichtung nach einem der vorhergehenden Ansprüche, die eine Haltevorrichtung (70, 78) zum Halten des zweiten Teils in der ersten Konfiguration aufweist.

6. Seilanhängevorrichtung nach Anspruch 4, die jeweilige Fangformationen (48) am ersten Teil (24) der Vorrichtung, in die die Laschen (32) eingreifen, umfasst.

7. Seilanhängevorrichtung nach Anspruch 6, worin die Laschen (32) in die Fangformationen (48) nach unten eintreten, wenn die Vorrichtung die zweite Konfiguration erreicht.

8. Seilanhängevorrichtung nach einem der vorhergehenden Ansprüche, worin der zweite Teil (26) eine Befestigungsformation (28) zum Eingriff in eine Zugformation eines Zugfahrzeugs oder benachbarten Containers aufweist.

9. Seilanhängevorrichtung nach Anspruch 8, worin die Befestigungsformation (28) eine Öffnung umfasst.

10. Seilanhängevorrichtung nach Anspruch 9, die ein Halteelement (50) zum Halten der Befestigungsformation in Eingriff mit der Zugformation umfasst.

11. Seilanhängevorrichtung nach Anspruch 10 in Abhängigkeit von Anspruch 8, worin die Zugformation eine Aussparungsformation (92) für den Eingriff des Halteelements der Anhängevorrichtung eines benachbarten Containers aufweist.

12. Fahrbarer Container, der eine Seilanhängevorrichtung nach einem der Ansprüche 1 bis 5 beinhaltet.

13. Fahrbarer Container nach Anspruch 12, der mit anderen identischen oder ähnlichen fahrbaren Containern aufgrund der Fähigkeit des Seilanhängers, in der ersten eingezogenen Konfiguration positioniert zu werden, stapelbar ist.

14. Fahrbarer Container nach Anspruch 13, der ein Abfallcontainer ist.

## Revendications

1. Un ensemble d'attelage de remorquage (22) destiné à être fixé sur un contenant mobile (18), l'ensemble d'attelage de remorquage incluant :
une première partie (24) qui peut être raccordée au contenant mobile ;
une deuxième partie (26) qui peut être fixée à, soit un contenant adjacent, soit un véhicule de remorquage, la deuxième partie (26) étant mobile de façon coulissante par rapport à la première partie (24), entre une première configuration rétractée et une deuxième configuration déployée ; et
un dispositif de loquet pour maintenir la deuxième partie (26) dans la deuxième configuration,
dans lequel le dispositif de loquet comprend un ou plusieurs éléments de loquet (42, 44) sur une des parties (24, 26), dans lequel le ou les éléments de loquet (42, 44) comprennent une formation de loquet (48) avec lequel une formation qui est sur l'autre partie (24, 26) se met en prise en deuxième configuration, dans lequel la ou les formations de loquet (48) ont une configuration pour y retenir la formation sur l'autre partie quand la deuxième partie de l'ensemble est soumise à des forces de compression dans le sens de la longueur,
**caractérisé en ce que** la ou les formations de loquet (48) ont une lèvre de retenue (48a).

2. Un ensemble d'attelage de remorquage selon la revendication 1 dans lequel, en première configuration, l'ensemble d'attelage de remorquage (22) est positionné dans un encombrement au sol minimum d'un contenant (10) auquel il est fixé.

3. Un ensemble d'attelage de remorquage selon la revendication 1 ou la revendication 2 dans lequel la première partie (24) inclut un élément de guidage (25) et la deuxième partie inclut une protubérance qui s'étend vers l'extérieur de la deuxième partie, et peut être reçue dans l'élément de guidage de façon à permettre un déplacement coulissant de la deuxième partie par rapport à la première partie.

4. Un ensemble d'attelage de remorquage selon la revendication 3 dans lequel la première partie inclut une paire d'éléments de guidage (25) et la protubérance de la deuxième partie inclut une paire de languettes (32), chacune pouvant être reçue dans un élément de guidage respectif (25).

5. Un ensemble d'attelage de remorquage selon l'une quelconque des revendications précédentes ayant un dispositif de retenue (70, 78) pour retenir la deuxième partie dans la première configuration.

6. Un ensemble d'attelage de remorquage selon la revendication 4 comprenant des formations de loquet respectives (48) sur la première partie (24) de l'ensemble, dans lesquelles les languettes (32) se mettent en prise.

7. Un ensemble d'attelage de remorquage selon la revendication 6 dans lequel les languettes (32) pénètrent dans les formations de loquet (48) vers le bas quand l'ensemble atteint la deuxième configuration.

8. Un ensemble d'attelage de remorquage selon l'une quelconque des revendications précédentes dans lequel la deuxième partie (26) a une formation de fixation (28) pour se mettre en prise avec une formation de remorquage d'un véhicule de remorquage ou d'un contenant adjacent.

9. Un ensemble d'attelage de remorquage selon la revendication 8 dans lequel la formation de fixation (28) comprend une ouverture.

10. Un ensemble d'attelage de remorquage selon la revendication 9 comprenant un élément de retenue (50) pour maintenir la formation de fixation en prise avec la formation de remorquage.

11. Un ensemble d'attelage de remorquage selon la revendication 10 lorsqu'elle dépend de la revendication 8 dans lequel la formation de remorquage a une formation de renfoncement (92) pour la mise en prise par l'élément de retenue de l'ensemble d'attelage d'un contenant adjacent.

12. Un contenant mobile incluant un ensemble d'attelage de remorquage selon l'une quelconque des revendications 1 à 5.

13. Un contenant mobile selon la revendication 12 qui peut être empilé avec d'autres contenants mobiles identiques ou similaires, grâce à l'aptitude de l'attelage de remorquage à être positionné dans la première configuration rétractée.

14. Un contenant mobile selon la revendication 13 qui est un contenant à déchets.
